# EUROPEAN PATENT APPLICATION

(11) **EP 3 679 838 A2**
(43) Date of publication of application: **15.07.2020**
(21) Application number: 19218349.9
(22) Date of filing: 19.12.2019
(51) Int. Cl.: A47G 9/02, B32B 5/22, B32B 7/09

(54) **A QUILT AND A METHOD OF MANUFACTURING A QUILT**

(30) Priority: 20.12.2018 GB 201820886
(71) Applicant: Comfy Quilts Limited, Wilmslow, Cheshire SK9 1AX (GB)
(72) Inventor: MORYOUSSEF, Max, Hale, Cheshire WA14 2HD (GB)
(74) Representative: Wilson Gunn

(57) **Abstract**

A quilt comprises mutually opposing webs of fabric and a layer of insulation distributed between the webs, the webs are stitched into the quilt by seams extending lengthwise, the quilt has a first region and a second region which are spaced from each other widthwise, the first region comprises a higher number of lengthwise seams than the second region; including a method of manufacturing a quilt; and an apparatus for manufacturing a quilt.

## Description

### Technical Field of the Invention

The present invention relates to a quilt, that is to say a covering made of insulation enclosed between layers, or webs of fabric, with the insulation being kept in place by lines of stitching, usually known as seams. Typically a quilt may be employed on a bed as a cover for sleeping under and, when configured in a manner that enables it to be enclosed within a removable and washable sleeve, also goes by the name of a duvet. Quilts may also be configured to lie on top of more traditional sheets and blankets and to create sleeping bags and other similar items.

### Background to the Invention

The primary purpose of a quilt is to provide insulation and warmth and, thereby to help its user to maintain a suitable sleeping temperature at which they are comfortable. The degree of insulation provided by a quilt is expressed in terms of a "tog" value or rating. The tog is effectively as a 'consumer friendly' unit of thermal insulance per unit area developed by the Shirley Institute. 1 tog = 0.1m²K/W (K is Kelvin and W is Watts). Lightweight summer quilts typically have a tog value of 3.0-4.5; spring/autumn quilts a tog value of 7.5 - 10.5; and winter quilts a tog value of 12.0 - 13.5.

Although users can select the tog value of their quilt to suit their needs, it is a common complaint that, when two people share a duvet, they have different warmth preferences. For example, typically, a woman's comfortable sleeping temperature has been found to be greater than a man's with the consequence that women tend to want to be warmer when sleeping than men. Self-evidently, these preferences directly affect the choice of optimum tog value so that where one duvet is to be used simultaneously by two people with different warmth preferences, the outcome will inevitably be a compromise in which neither person has the optimum insulation. This can typically present a problem when a man and a woman use the same duvet and each has a different warmth preference.

Individual duvets are known in which each has a different tog rating, with the duvets being fastenable to each other by a zip fastener or Velcro®. US2016/0270565 shows a duvet cover comprised of a base sheet and a top sheet interconnected by a peripheral stitched seam and between which a down feather sheet is retained. The loft of the down feathers in their sections is modified by applying design stitch seam patterns formed by stitching. The quilt has a central transverse section which has a design pattern having close stitch lines to compress the down feathers and thereby reducing the loft of the down and the air trapped therein to provide compressed zones of less thermal insulating efficiency. GB2558636 provides a cover for sleeping comprising two portions having different tog ratings from one another. GB2548898 also discloses a sectionalised duvet.

### Summary of the Invention

According to an embodiment of the present invention, there is provided a method of manufacturing a quilt comprising the steps of:
feeding mutually-opposing webs of fabric in a longitudinal direction;
during feeding of the webs:
   a). inserting insulating material between the webs;
   b). stitching the webs together with a plurality of seams to retain the insulating material between the webs;
wherein the quilt has first and second regions spaced apart width-wise (transverse to the longitudinal direction), the method comprising the step of stitching a higher number of seams per unit area in the first region than in the second region.

In this manner, a quilt having differing tog values in different areas may be produced using a conventional manufacturing machine and at a speed and cost which is very similar to that of a conventional quilt having only a single tog value throughout.

The first region and the second region may be formed by a multi-needle stitching machine. The multi-needle stitching machine may be arranged to form more seams, or 'stitch lines' in the first region than in the second region.

The method may further comprise folding and packing the quilt.

The insulating material may be carded prior to being fed between the mutually opposing faces of the webs of fabric.

The filling material may be a synthetic filling material.

The filling material may be a polyester filling material. The filling material may be at least 95% polyester, at least 90% polyester, at least 80% polyester, at least 70% polyester, at least 60% polyester, or at least 50% polyester.

The webs of fabric may each be dispensed from a roll and more preferably different webs are dispensed from distinct rolls. Preferably, the webs of fabric have the same width, with the webs being wider than the insulating material between them. The rolls are preferably offset from each other in a heightwise direction (which is transverse to both the lengthwise and widthwise directions).

The quilt may comprise or consist of an insulating or 'filling' material of a synthetic material. The synthetic filling material may be polyester, or at least substantially polyester. The synthetic filling material may be at least 90% polyester, at least 80% polyester, at least 70% polyester, at least 60% polyester, or at least 50% polyester. The synthetic filling material may be carded. The filling material may itself be a pre-formed quilt (preferably containing synthetic insulating material). It follows that, in such cases, the seams created during the present method may cross over, or run parallel to, existing seams in the insulating material.

Each seam compresses the filling material located directly between the first and second webs of fabric along the stitching line. The filling material is also compressed, albeit to a lesser extent, in regions immediately adjacent to each line of stitching. The compressed filling material results in less air being trapped within the filling material which decreases the insulating ability of the filling material (lower tog rating) thus keeping a user cooler. Consequently, the greater concentration of seams in the first region causes a reduction in the loft of the insulating material in that region and, thereby, reduces the tog value of that region by comparison to that of the second region. This is so even though the concentration of insulating material is uniform across both regions of the quilt (meaning that the first and second regions contain same quantity of insulating material).

It should be noted that, whereas natural filling materials, such as feather or down feather, have a tendency to displace within the quilt when used as a filling material, synthetic filling materials, such as polyester, do not display this tendency, or at least do not display it to the same degree. The inventors have appreciated that as a consequence of the lower displacement tendency of synthetic materials, the effect in terms of reduction of tog rating in the sections of higher seam density is believed to be more pronounced when the filling material is synthetic due to the introduction of additional sewing lines (cold spots that would register a lower tog value for the same fibre filling GSM with the tog testing unit).

The tog rating of the first region may be lower than the tog rating of the second region. The quilt may comprise a 1-tog, 2-tog, 3-tog or greater variance between the tog values of the first and second regions.

The first and second regions are preferably equal in size.

Where the present invention relates to a duvet, the filling material may be of any size, including but not limited to sizes suitable for a double or twin duvet, kingsize duvet and super kingsize duvet.

Where the present invention is formed as a sleeping bag, the sleeping bag may be a double sleeping bag.

The second region of the quilt, may also comprise at least one seam, provided that the number of seams in the first region is greater than the number of seams in the second region. The seams formed in the second region may be formed in the same way, or in a different way, as the seams formed in the first region.

The first region and the second region may be substantially equal in size. It follows that it is typical that two people sharing a quilt will each make use of half of the quilt. As such, the first region may comprise about half of the total area of the quilt, and the second region may comprise about half of the total area of the quilt.

The seams may be parallel to each other.

Where the first region and/or the second region comprise multiple seams, a channel, filled with filling material, is formed between each pair of seams. A channel is also formed between the edge of the quilt and the first seam formed inwardly from such edge. There may be more channels in the first region than the second region.

The seams may be orientated equidistant apart such that the width of each channel is equal, or substantially equal.

The seams may be longitudinal relative to the length of the quilt. The seams may additionally be transverse relative to the length of the quilt. The quilt may comprise longitudinal seams and transverse seams relative to the length of the quilt.

The seams may extend from one edge of the quilt to an opposite edge of the quilt.

The quilt, may comprise a combination of lengthwise and widthwise seams, having the same or different length, relative to the length of the duvet. The quilt, may comprise seams orientated in any manner such that the seams are aesthetically pleasing for a user. The quilt, may comprise a seam orientated in a lengthwise direction and positioned centrally relative to the area of the quilt. Such a seam may be a central, longitudinal seam. Such a seam effectively defines two halves of the quilt one half being the first region and the other being the second region.

Where the present invention is formed as a duvet, the duvet may be of any size, including but not limited to, double or twin, kingsize and super kingsize.

Where the present invention is formed as a sleeping bag, the sleeping bag may be of any size, including but not limited to, standard size, standard women's size, standard men's size, extra-large women's size, extra-large men's size and double sleeping bag.

The number of seams in the first region may adhere to the formula X+1, X+2, X+3, X+4, X+5, X+6, X+7, X+8, X+9 or X+10, where X is the number of seams in the second region. The width of each channel formed by the seams may be between about 5% and 10% of the total width of the quilt; between about 10% and 15% of the total width of the quilt; between 0% and about 30% of the total width of the quilt; between about 5% and 25% of the total width of the quilt; between about 10% and 20% of the total width of the quilt; between about 12% and 18% of the total width of the quilt; or between about 14% and 16% of the total width of the quilt.

The seams may be orientated such that the channels formed each have different widths, relative to the total width of the quilt.

The seams may have the same or different stitching and therefore the same or different numbers of stitches per unit length of seam.

A further embodiment of the present invention includes an apparatus for manufacturing a quilt, comprising:
a stitching machine arranged to receive a layered composite comprising at least a first fabric web, a second fabric web and a filling material therebetween;
the stitching machine being configured to stitch together each longitudinal edge of each fabric web, and to form at least one additional seam in the quilt, such that the quilt, comprises a first region having a higher seam density than a second region; and
an automatic cutting and hemming machine configured to cut the stitched layered composite to provide a quilt.

The apparatus may comprise an automatic folding and packing machine.

The stitching machine may be a multi-needle stitching machine.

The multi-needle stitching machine may be arranged to provide a central, longitudinal seam.

The multi-needle stitching machine may be arranged to provide a greater number of seams on one side of the central, longitudinal seam than the other side of the central, longitudinal seam.

The apparatus may comprise a first roll of fabric to provide the first fabric web and a second roll of fabric to provide the second fabric web.

A further embodiment of the present invention includes a quilt comprising mutually opposing webs of fabric and a layer of insulation substantially uniformly distributed between the webs, the webs being stitched into a quilt by seams extending lengthwise, wherein the quilt has first and second regions which are spaced from each other widthwise, and the first region has a higher number of lengthwise seams than the second region.

The insulating material may be a man made material.

The insulating material may be a polyester insulating material. The insulating material may be at least 95% polyester, at least 90% polyester, at least 80% polyester, at least 70% polyester, at least 60% polyester, or at least 50% polyester.

The insulating material may comprise carded polyester.

There may be a 1-tog, 2-tog, 3-tog or greater variance between the tog values of the first and second regions.

### Detailed Description of the Invention

In order that the invention may be more clearly understood one or more embodiments thereof will now be described, by way of example only, with reference to the accompanying drawings, of which:
- Fig. 1: is a schematic plan view of a method of manufacturing a quilt according to an embodiment of the present invention;
- Fig. 2: is a side view of the initial feeding stage of the method illustrated in Fig. 1;
- Fig. 3: is a plan view of a quilt according to an embodiment of the present invention;
- Fig. 4: is a plan view of an alternate quilt according to an embodiment of the present invention; and
- Fig. 5: is a cross-section of a layered composite.

With reference to the figures, there is shown an embodiment of a method of manufacturing a quilt of the present invention for use as a duvet and two embodiments of quilts again for use as duvets, of the present invention. More particularly in one embodiment of the present invention an example will be illustrated of the manufacture of a duvet suitable for two people, in which one side of the duvet has a lower tog value than the other. Various of the embodiments will be described in conjunction with modifications, alternatives or variations thereto. It is to be understood that modifications and variations disclosed herein are not limited in their application to the embodiments in connection with which they are first described and, unless stated otherwise, any modification, alternative or variation to an embodiment can be employed with any embodiment disclosed.

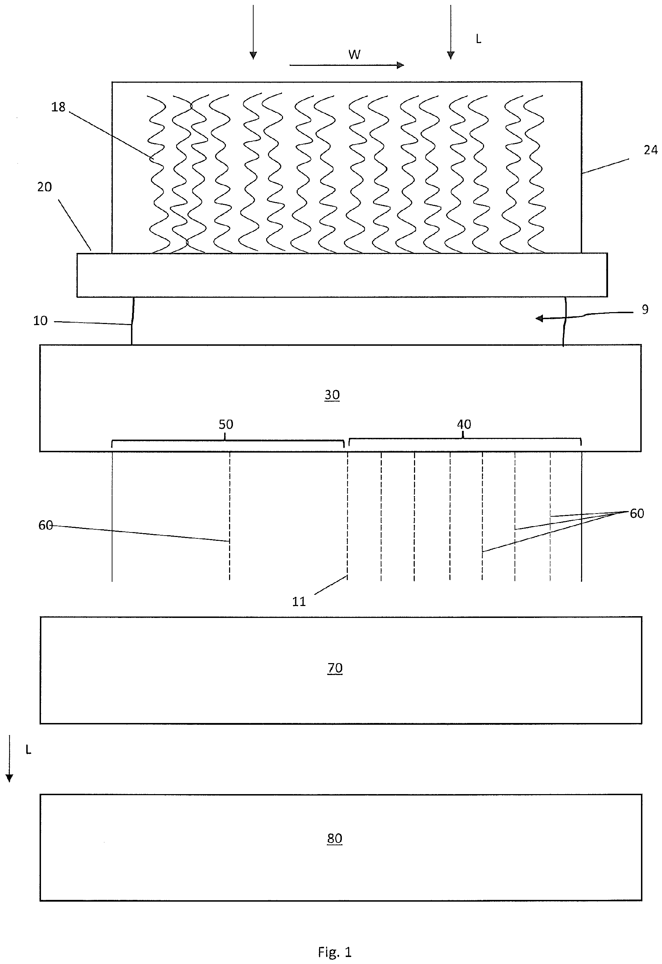

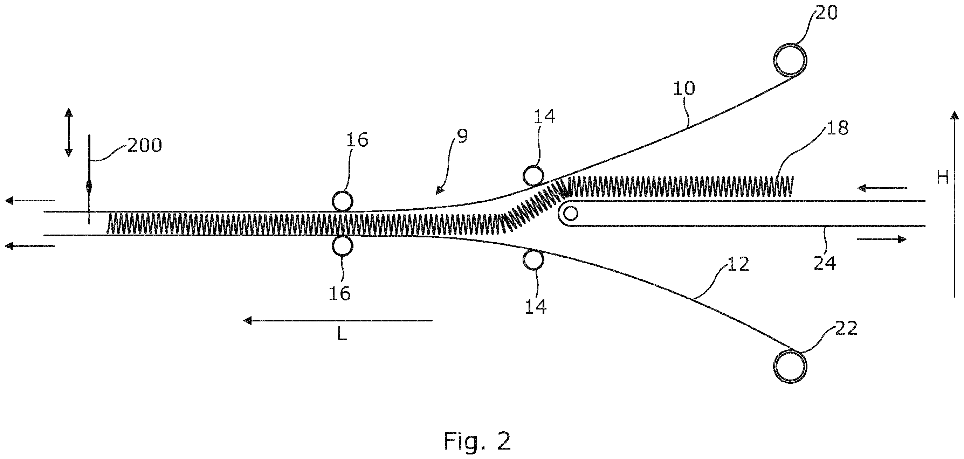

Referring now to Figs 1 and 2, fabric webs 10, 12 are each drawn from an individual dispensor. In an alternative embodiment, a single dispensor may serve to provide both webs 10, 12. In the present embodiment the dispensors for the webs 10, 12 are provided by rolls 20, 22 of fabric respectively. The drawn webs 10, 12 are each fed in a direction defined as lengthwise (indicated by the arrow L). The feeding of the webs 10, 12 is performed by means of various drive, tensioning and guide rollers, of which guide rollers 14 and 16 are shown in Fig. 2, which provide, respectively, the motive force for the feeding action and tensioning force to provide a reliable and smooth feed and guidance to ensure that the webs 10, 12 are suitably positioned during the feed. During the initial phase of the feed the webs 10, 12 are offset from each other in a heightwise direction (indicated by arrow H). In the present embodiment the offset is conveniently achieved by locating the rolls 20, 22 in a mutual heightwise offset, though other locations for the rolls is of course possible. The webs 10, 12 are aligned substantially in register with each other in a widthwise direction (indicated by arrow W) so that they are mutually opposing.

After the webs 10, 12 have been drawn off the rolls 20, 22, an insulating material (also known as a filling material) 18 is fed inbetween them from a conveyor belt 24. In a preferred embodiment the insulating material 18 is inserted uniformly between the webs 10, 12. Uniform distribution is, however, not essential. For example, one alternative embodiment provides a non-uniform but regular, periodic distribution of the insulating material. Such a distribution of insulating material, being regular can, across an area which is large by comparison to the periodicity provide the same, or a very similar insulating effect to a uniform distribution. In the present embodiment uniformity is achieved in the widthwise direction by the uniform distribution of insulating material as it is fed between the webs 10, 12. Uniformity in the lengthwise direction is provided by feeding the insulating material 18 onto the conveyor belt 24 at a substantially constant rate so that the insulating material 18 is correspondingly delivered between the webs 10, 12 at a substantially constant rate.

According to the present embodiment, the insulating material comprises a carded polyester filling material which is formed of 100% polyester.

Once the Polyester fibre is inserted between the webs 10, 12 the resulting layered composite 9 created by the lamination of the two webs 10, 12 and the interstitial insulating material 18 is fed into a multi-needle quilt stitching machine 30. The stitching machine 30 stitches a plurality of seams 60 into the two webs 10, 12 thereby to fasten them together and, in so doing, to retain the insulating material 18 between them to create a quilt. In the present embodiment at least some of the seams extend lengthwise, such as for example, the seam created by the central, longitudinal seam 11. The use of lengthwise seams 60 is particularly efficient since they can be created by the use of needles (one of which 200 is illustrated in Fig 2 by way of example) which remain during the lengthwise feeding of the composite 9 through the stitching machine.

Although the distribution of insulating material 18 is substantially uniform, it is nonetheless desired to create a duvet having two regions which each have a different tog value. In the present embodiment, the first region 40 (lower tog value) and second region 50 (higher tog value), are spaced apart widthwise and it is desired to reduce the tog value of the first region 40 relative to that of the second region 50. According to a preferred embodiment of the present invention, the tog value of the first region 40 is reduced by using additional seams in the first region 40 to compress the insulating material and, thereby, to reduce its loft and consequently introducing additional 'cold spots'. As a result of the compression and consequent loss of loft, even though the first region contains the same amount of insulating material as the second, the tog value provided by the insulating material in the first region 40 is reduced by comparison to that in the second region 50.

In a preferred embodiment, it is desired that smaller areas within the first region 40 all have, as far as practically possible, the same tog value and that this tog value is the same as the tog value of the first region 40 as a whole. Consequently, in a preferred embodiment, the additional seams provided in the first region are evenly distributed with the result that the first region 40 has a higher number of seams per unit area across its whole area than the second region 50. In the present embodiment, this is achieved by the provision of additional lengthwise seams 60, with the result firstly that the number of seams extending lengthwise in the first region 40, per unit distance measured widthwise is greater in the first region 40 than the second region 50; and secondly that the lengthwise seams 60 in the first region 40 are evenly distributed widthwise. In the present embodiment, the greater concentration of lengthwise seams is created by the use of a correspondingly greater number of stitching needles 200 on the stiching machine 30 through which the first region of the composite 9 is fed. The additional needles 200, evenly spaced widthwise within the machine 30 above the side of the composite which will form the first region 40, create the lengthwise seams 60 as the layered composite 9 is fed through the stitching machine.

Example of tested Dual Tog Duvets:-
6 x extra sewing channels on first region 40 on a double sized duvet with a gross weight of 1818 grams resulted in the second region 50 achieving 8.9tog and the first region 50 achieving 6.7tog (equivalent to a 2.2tog reduction in the first region).
2 x extra sewing channels on first region 40 on a double sized duvet with a gross weight of 1890 grams resulted in the second region 50 achieving 8.4tog and the first region 40 achieving 7.3tog (equivalent to a 1.1tog reduction in the second region).

The now-quilted layered composite 9 is fed into a cutting and hemming unit 70. This automatically side overlocks the composite 9 trimming off excess width waste fabric and fibre.

The side overlocked layered composite 9 is then automatically cut and hemmed by the machine 70, which cuts the quilt in a widthwise direction and forms overlocking seams on both widthwise edges.

The fully sewn quilt is then fed into an automatic folding and packing machine 80 in order to fold and pack the quilt.

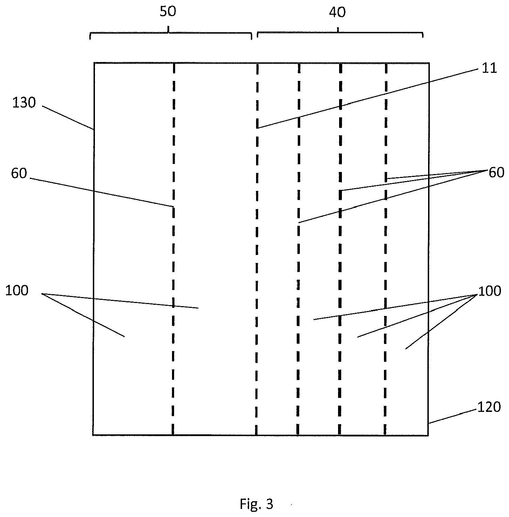

As shown in Figure 3, a multi-needle arrangement of the stitching machine 30, of this particular embodiment, forms three seams 60 in the first region 40 and one seam 60 in the second region 50. Each of the seams 60 extend lengthwise and the seams 60 extend substantially parallel to one another. In this particular embodiment, the first region 40 is defined as the area of the quilt between the central, lengthwise line 11 and lengthwise edge 120. The second region 50 is defined as the area of the quilt between the line 11 and lengthwise edge 130. A channel 100 can be defined between, on the one hand, adjacent seams 11 and/or 60 and on the other between the lengthwise edges of the quilt and the adjacent seam 60.

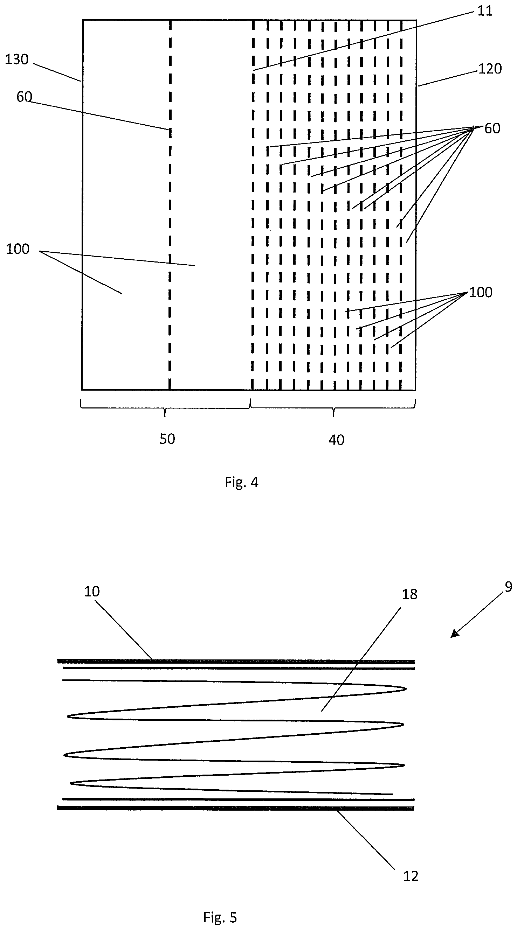

As shown in Figure 4, in an alternative embodiment a multi-needle arrangement of the stitching machine 30 forms eleven seams 60 in the first region 40 and one seam 60 in the second region 50. In this particular embodiment, the first region 40 is defined as the area of the quilt between the central, longitudinal line 11 and lengthwise edge 120. The first region 40 is defined as the area of the quilt between the central, longitudinal line 11 and lengthwise edge 130. The second region 50 comprises a higher number of sewing lines than the first region 40. A channel 100 is formed between each adjacent pair of seams 60 and between the lengthwise edge 120, 130 of the quilt and the adjacent seam 60.

One or more embodiments are described above by way of example only. Many variations are possible without departing from the scope of protection afforded by the appended claims.

## Claims

1. A method of manufacturing a quilt comprising the steps of:
feeding mutually-opposing webs of fabric in a lengthwise direction;
during feeding of the webs:
a). feeding insulating material between the webs;
b). stitching the webs together with a plurality of seams to retain the insulating material between the webs;
wherein the quilt has first and second regions spaced apart width-wise, the method comprising the step of stitching a higher number of seams in the first region than in the second region.

2. A method according to claim 1 wherein the first region has a higher number of seams per unit area across the whole of the first region than the second region.

3. A method according to claim 2 wherein the distribution of seams across the first region is substantially uniform.

4. A method according to any one of the preceding claims wherein at least some of the seams extends lengthwise.

5. A method according to claim 4 wherein the number of seams extending lengthwise per unit distance measured widthwise is greater in the first region than the second region; the lengthwise seams optionally being evenly spaced widthwise; the lengthwise and widthwise directions optionally being substantially perpendicular.

6. A method according to any one of the preceding claims wherein the insulating material is distributed evenly between the webs to provide a substantially uniform concentration of insulating material across the area of the quilt;
the method optionally further comprising the steps of cutting and hemming the periphery of the webs.

7. A method according to any one of the preceding claims wherein the insulating material is man made, or wherein the insulating material is carded polyester.

8. A method according to any preceding claim, wherein the webs of fabric are each dispensed from a roll of fabric; the webs of fabric optionally being drawn from separate rolls; the rolls from which the webs are drawn optionally being offset from each other in a heightwise direction transverse to the lengthwise and widthwise directions; the insulating material optionally being fed between the webs from a position between the rolls.

9. A method according to any preceding claim, wherein there is at least a 2-tog variance between the tog rating of the first and second regions.

10. A method according to any preceding claim, wherein the first and second regions are substantially equal in size; the first and second regions optionally having substantially the same dimensions.

11. A quilt comprising mutually opposing webs of fabric and a layer of insulation substantially uniformly distributed between the webs, the webs being stitched into a quilt by seams extending lengthwise, wherein the quilt has first and second regions which are spaced from each other widthwise, and the first region has a higher number of lengthwise seams than the second region.

12. A quilt according to claim 11 wherein the insulating material is man made,
or wherein the insulating material comprises carded polyester

13. A quilt, according to any of claims 11 or 12, wherein there is at least a 2-tog variance between the tog rating of the first and second regions.

14. An apparatus for manufacturing a quilt, comprising:
a stitching machine arranged to receive a layered composite comprising at least a first fabric web, a second fabric web and a filling material therebetween;
the stitching machine being configured to stitch together each longitudinal edge of each fabric web, and to form at least one additional seam in the quilt, such that the quilt, comprises a first region having a higher seam density than a second region; and
an automatic cutting and hemming machine configured to cut the stitched layered composite to provide a quilt.

15. An apparatus according to claim 14, wherein the multi-needle stitching machine is arranged to provide a central, longitudinal seam; the multi-needle stitching machine optionally being arranged to provide a greater number of seams on one side of the central, longitudinal seam than the other side of the central, longitudinal seam; the apparatus optionally comprising an automatic folding and packing machine.
